# EUROPEAN PATENT APPLICATION

(11) **EP 3 113 116 A1**
(43) Date of publication of application: **04.01.2017**
(21) Application number: 16172851.4
(22) Date of filing: 03.06.2016
(51) Int. Cl.: G06T 19/00, G06F 17/00, G06Q 10/00

(54) **DISPLAY CONTROL METHOD AND INFORMATION PROCESSING APPARATUS**

(30) Priority: 02.07.2015 JP 2015133642
(71) Applicant: FUJITSU LIMITED, 211-8588 Kanagawa (JP)
(72) Inventor: Koga, Susumu, Kanagawa, 211-8588 (JP)
(74) Representative: Hoffmann Eitle

(57) **Abstract**

A display control method is executed by a computer. The display control method includes generating a first file that includes images of a plurality of frames captured by an imaging device; generating a second file that includes identification information of a frame that is determined to include an image of a reference object among the images of the plurality of frames, and object data registered in association with the reference object included in the determined frame; and sending the first file and the second file to an information processing apparatus configured to execute a combination process of combining the images of the plurality of frames with the object data, based on the identification information.

## Description

### FIELD

The embodiments discussed herein are related to a display control method and an information processing apparatus.

### BACKGROUND

There is known a technology of using the AR (Augmented Reality) technology to detect a predetermined marker from an image of a reality space acquired from a camera of a mobile terminal, and to display and superimpose a virtual object associated with the marker on the image of the reality space, on a display (see, for example, Patent Document 1).

One of the purposes of the above technology is usage in an inspection operation, etc., in a facility such as a plant, a building, etc. Specifically, an object of an AR content, which indicates that a predetermined procedure, etc., is set, is displayed and superimposed on a camera image, to provide support of the inspection operation. The object is displayed based on an AR marker (standard object) attached to a predetermined location in the facility in advance. When a worker wants to know the details of the procedure, etc., indicated by the object, the worker performs operations of selecting and validating the object, to display the precautions when working, the detailed information of the facility, etc.

Furthermore, in order for a manager at a remote office to check whether the worker is properly working at the work site and to provide appropriate support (remote support), the following operations are performed. Specifically, images are recorded by a camera of the worker's terminal, the video file is sent to a server, and the manager receives a video file from the server and confirms the images in the video file. Note that the reason why a video file is used is that the work site is often in an offline environment where data communication is not possible. Therefore, images are recorded while the worker is working, and the images are collectively transmitted as a video file after the worker has finished working and has entered an online environment where data communication is possible.

Patent Document 1: Japanese Laid-Open Patent Publication No. 2012-103789

### SUMMARY

Accordingly, it is an object in one aspect of the invention to provide a display control method and an information processing apparatus capable of reproducing an image of an object on the side that is providing remote support, without increasing the load of the terminal when remote support is provided to the terminal.

According to an aspect of the embodiments, a display control method executed by a computer includes generating a first file that includes images of a plurality of frames captured by an imaging device; generating a second file that includes identification information of a frame that is determined to include an image of a reference object among the images of the plurality of frames, and object data registered in association with the reference object included in the determined frame; and sending the first file and the second file to an information processing apparatus configured to execute a combination process of combining the images of the plurality of frames with the object data, based on the identification information.

### BRIEF DESCRIPTION OF THE DRAWINGS

FIG. 1 illustrates an example of a configuration of a system according to an embodiment;
FIG. 2 is an example of a software configuration of a worker terminal;
FIG. 3 illustrates an example of a software configuration of a remote support server;
FIG. 4 illustrates an example of a hardware configuration of the worker terminal;
FIG. 5 illustrates an example of a configuration of the remote support server;
FIG. 6 illustrates an overview of a first process example;
FIGS. 7A through 7D illustrate examples of data held by the worker terminal in the first process example;
FIGS. 8A through 8C illustrate examples of data held by the remote support server in the first process example;
FIG. 9 is a flowchart of an example of a process performed by the worker terminal according to the first process example;
FIG. 10 is a flowchart of an example of a video recording process according to the first process example;
FIG. 11 illustrates an example of recognizing an AR marker;
FIG. 12 is a flowchart of an example of a process performed by the remote support server according to the first process example;
FIG. 13 illustrates an overview of a second process example;
FIGS. 14A through 14D illustrate examples of data held by the worker terminal in the second process example;
FIGS. 15A through 15C illustrate examples of data held by the remote support server in the second process example;
FIG. 16 is a flowchart of an example of a process performed by the worker terminal according to the second process example;
FIG. 17 is a flowchart of an example of a process performed by the remote support server according to the second process example;
FIG. 18 illustrates an overview of a third process example;
FIGS. 19A through 19D illustrate examples of data held by the worker terminal in the third process example;
FIGS. 20A through 20C illustrate examples of data held by the remote support server in the third process example;
FIG. 21 is a flowchart of an example of a video recording process according to the third process example; and
FIG. 22 is a flowchart of an example of a process performed by the remote support server according to the third process example.

### DESCRIPTION OF EMBODIMENTS

The AR technology is used, for example, at a work site, where the worker is able to work while confirming objects displayed and superimposed on camera images. However, objects superimposed by the AR technology are not included in image files sent to the manager for the purpose of receiving remote support. This is because the processing load of combining a camera image and an object at a terminal is high, and when the fps (frames per second) value of the video is high, it is not possible to maintain stable operations at the terminal. Therefore, camera images are recorded and video files are generated by using a standard recording method (service) provided by the OS of the terminal (Android OS, etc.).

For this reason, the manager at a remote office views images that are different from the images that are actually viewed by the worker. Thus, the manager is unable to see the work procedure, precautions, etc., that are displayed according to objects. Therefore, the manager is unable to appropriately check the work or provide appropriate support. Note that a camera image in the video file includes the AR marker, and therefore it may appear to be possible to extract the AR marker from the image and reproduce the object. However, the video file is compressed for the purpose of improving the transmission efficiency, and therefore the image quality is deteriorated and it is difficult to accurately recognize the AR marker, which makes it difficult to accurately reproduce an object.

Preferred embodiments of the present invention will be explained with reference to accompanying drawings.

### <Configuration>

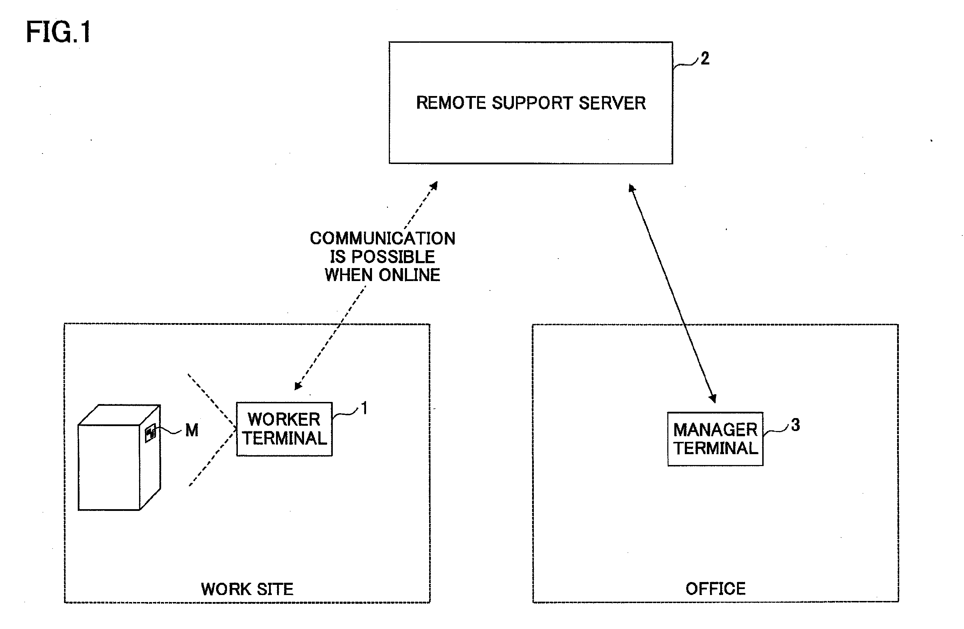

FIG. 1 illustrates an example of a configuration of a system according to an embodiment. In FIG. 1, at a work site, images are photographed (captured) by a camera (imaging device) of a worker terminal 1 used by a worker. When an AR marker (reference object) M, which is attached to various locations in a facility, etc., is included in the field of view to be photographed, an AR content (object) is displayed and superimposed on the camera image according to the AR technology for the worker, to support the work. Furthermore, the worker terminal 1 records the images taken while the worker is working, and sends a video file, etc., to a remote support server 2 when the worker terminal 1 is online.

The remote support server 2 provides basic data for AR display to the worker terminal 1 and also receives a video file, etc., from the worker terminal 1, when the worker terminal 1 is online. Furthermore, the remote support server 2 combines the camera image and the image of the AR content based on a video file, etc., received from the worker terminal 1, and provides the video file in which the images are combined to a manager terminal 3 used by a manager in an office.

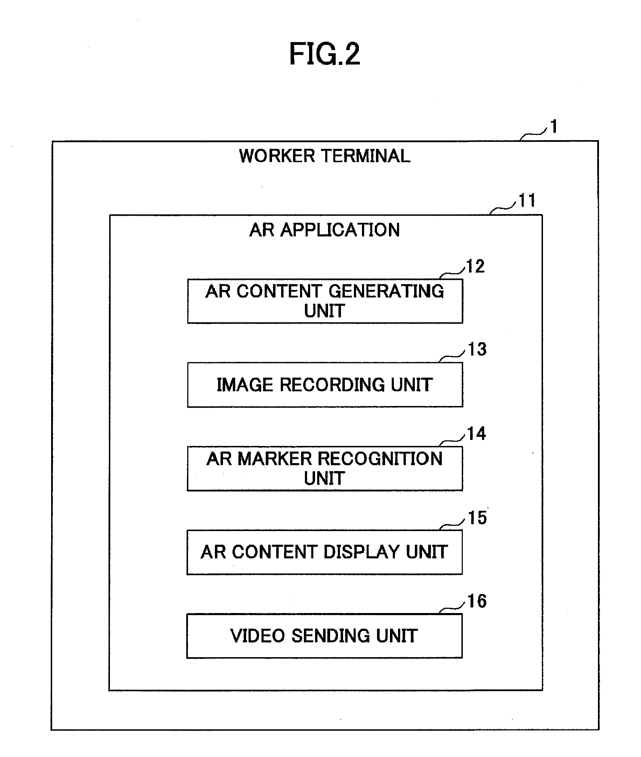

FIG. 2 is an example of a software configuration of the worker terminal 1. In FIG. 2, the worker terminal 1 includes an AR content generating unit 12, an image recording unit 13, an AR marker recognition unit 14, an AR content display unit 15, and a video sending unit 16, as functions realized by an AR application 11.

The AR content generating unit 12 has a function of acquiring basic data for AR display from the remote support server 2 in an online environment, and generating an AR content in advance, which is to be used for display in an offline environment. The image recording unit 13 has a camera function of photographing images and a function of recording a video when video recording is instructed. The AR marker recognition unit 14 has a function of recognizing an AR marker in a photographed image (identifying an AR marker, recognizing the position of the AR marker, etc.). The AR content display unit 15 has a function of displaying and superimposing an AR content corresponding to the recognized AR marker, on the camera image. The video sending unit 16 has a function of sending a video file, etc., that has been recorded, to the remote support server 2.

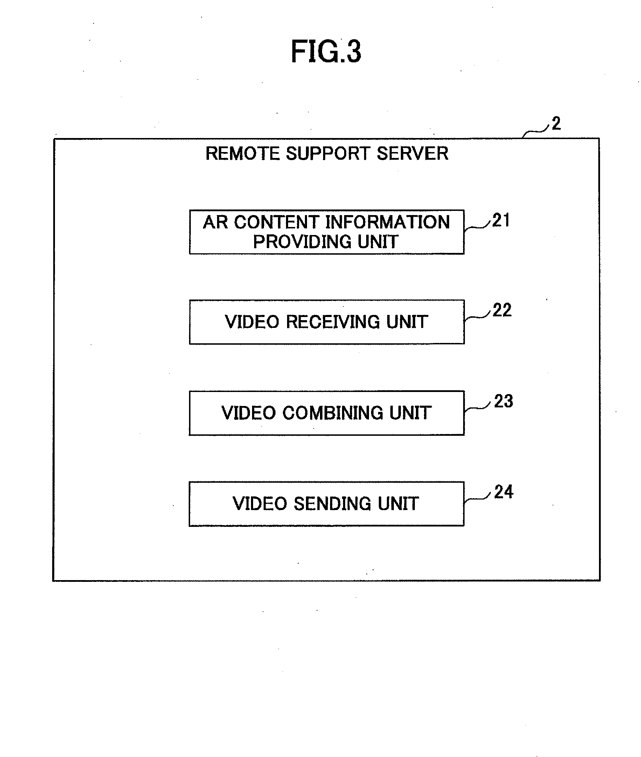

FIG. 3 illustrates an example of a software configuration of the remote support server 2. In FIG. 3, the remote support server 2 includes an AR content information providing unit 21, a video receiving unit 22, a video combining unit 23, and a video sending unit 24.

The AR content information providing unit 21 has a function of providing basic data (AR content information) for AR display, in response to a request from the worker terminal 1. The video receiving unit 22 has a function of receiving a video file, etc., from the worker terminal 1. The video combining unit 23 has a function of combining the camera image with image of the AR content, based on the video file, etc., received from the worker terminal 1. The video sending unit 24 has a function of sending the video file in which the images have been combined, to the manager terminal 3 at the office (send the video file after waiting for a request from the manager terminal 3, etc.).

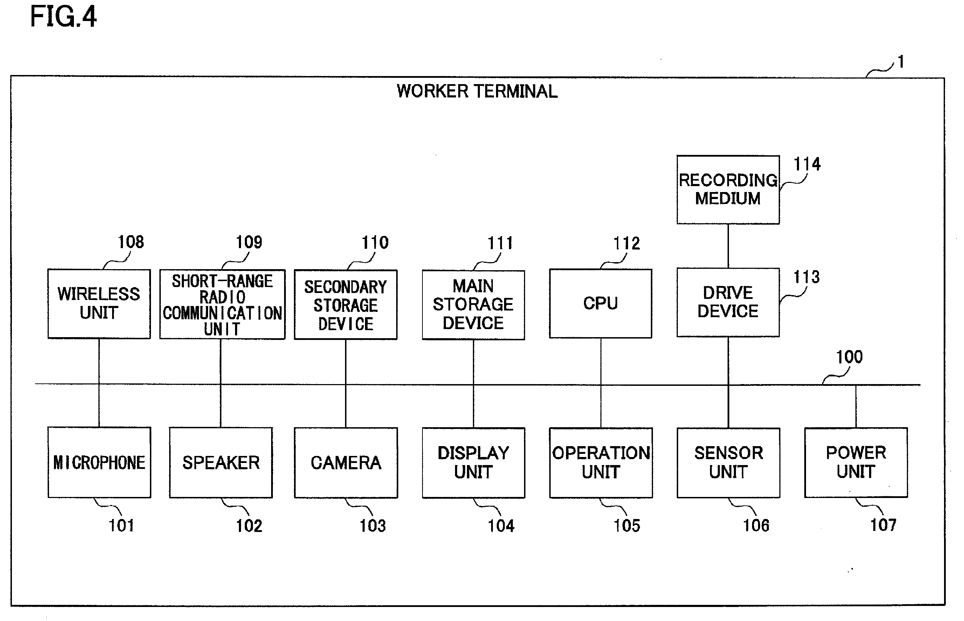

FIG. 4 illustrates an example of a hardware configuration of the worker terminal 1. In FIG. 4, the worker terminal 1 includes a microphone 101, a speaker 102, a camera 103, a display unit 104, an operation unit 105, a sensor unit 106, a power unit 107, a wireless unit 108, a short-range radio communication unit 109, a secondary storage device 110, a main storage device 111, a CPU 112, a drive device 113, and a recording medium 114, which are connected to a bus 100.

The microphone 101 inputs voice sound emitted by the user and other sounds. The speaker 102 outputs the voice sound of the communication partner when a telephone function is used, and outputs a ringtone, a sound effect of an application, etc. The camera 103 takes an image (video image, still image) of an actual space in an angle of field set in advance in the terminal. The display unit 104 displays an OS and screens (a screen that is provided as a standard screen by the OS of the terminal, an image photographed by the camera, data of an AR object projected on the screen, etc.) set by various applications to the user. The screen of the display unit 104 may be a touch panel display, etc., in which case the display unit 104 also has a function of an input unit for acquiring information input by the user when the user taps, flicks, or scrolls the screen, etc.

The operation unit 105 includes an operation button displayed on the screen of the display unit 104, buttons provided on the outside of the terminal, etc. Note that the operation button may be a power button, a home button, a sound volume adjustment button, a return button, etc. The sensor unit 106 detects the position, the orientation, the motion, etc., of the terminal that are detected at a certain time point or that are detected continuously. Examples are a GPS, an acceleration sensor, an azimuth orientation sensor, a geomagnetic sensor, a gyro sensor, etc. The power unit 107 supplies power to the respective units of the terminal. The wireless unit 108 is a unit for sending and receiving communication data, which receives radio signals/communication data from a base station (mobile network) by using an antenna, etc., and sends radio signals to the base station. The short-range radio communication unit 109 enables short-range radio communication with computers such as other terminals, etc., by using a short-range radio communication method such as infrared-ray communication, WiFi, Bluetooth (registered trademark), etc.

The secondary storage device 110 is a storage such as a HDD (Hard Disk Drive), a SSD (Solids State Drive), etc. Based on control signals from the CPU 112, the secondary storage device 110 records application programs, control programs provided in a computer, etc., and inputs and outputs data according to need. The main storage device 111 stores execution programs, etc., read from the secondary storage device 110 according to an instruction from the CPU 112, and stores various kinds of information, etc., obtained while executing programs. The CPU 112 realizes various processes, by controlling processes of the overall computer such as various operations, input and output of data with the hardware elements, etc., based on a control program such as an OS or execution programs stored in the main storage device 111. In the drive device 113, for example, a recording medium, etc., may be detachably set, and the drive device 113 reads various information recorded in the recording medium that has been set, and writes predetermined information in the recording medium. The recording medium 114 is a computer-readable recording medium storing execution programs, etc. The functions of the units of the worker terminal 1 illustrated in FIG. 2 are realized by programs executed by the CPU 112. The programs may be provided in a recording medium or may be provided via a network.

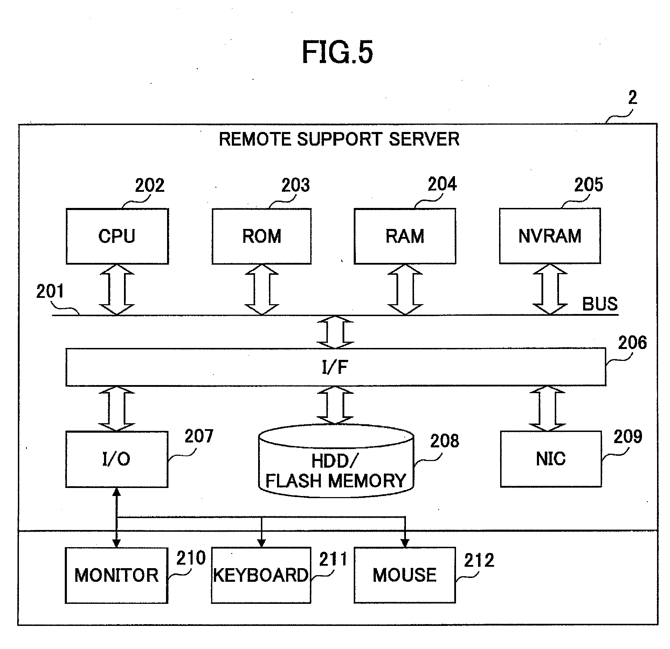

FIG. 5 illustrates an example of a configuration of the remote support server 2. In FIG. 5, the remote support server 2 includes a CPU (Central Processing Unit) 202, a ROM (Read Only Memory) 203, a RAM (Random Access Memory) 204, and a NVRAM (Non-Volatile Random Access Memory) 205, which are connected to a system bus 201. Furthermore, the remote support server 2 includes an I/F (Interface) 206; an I/O (Input/Output Device) 207, a HDD (Hard Disk Drive)/flash memory 208, and a NIC (Network Interface Card) 209 connected to the I/F 206; and a monitor 210, a keyboard 211, and a mouse 212 connected to the I/O 207, etc. A CD/DVD (Compact Disk/Digital Versatile Disk) drive, etc., may be connected to the I/O 207. The functions of the units of the remote support server 2 illustrated in FIG. 3 are realized by programs executed by the CPU 202. The programs may be provided in a recording medium or may be provided via a network.

### <First process example>

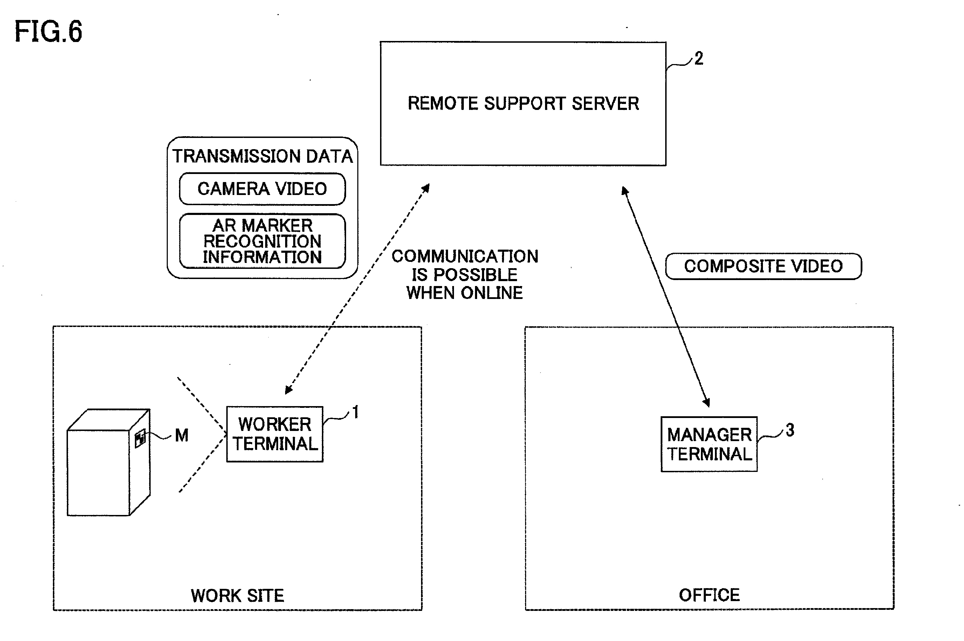

FIG. 6 illustrates an overview of a first process example. In FIG. 6, the worker terminal 1 at a work site generates a file of a camera video taken during the work process and a file of AR marker recognition information, and sends the files to the remote support server 2 when the worker terminal 1 is online. The remote support server 2 combines the camera image with the image of the AR content based on the files received from the worker terminal 1, and provides a file of the composite video to the manager terminal 3 used by a manager in an office.

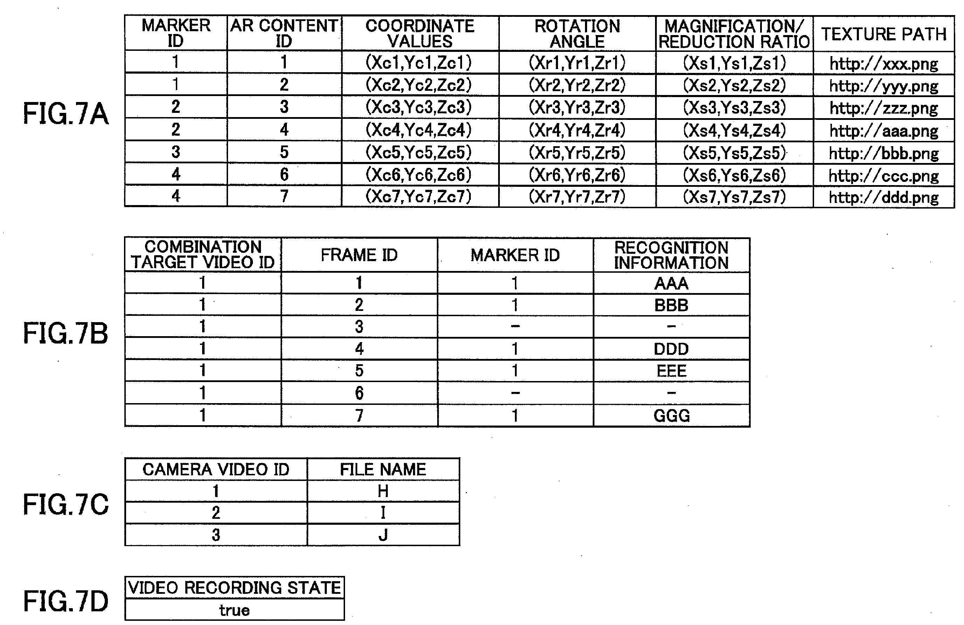

FIGS. 7A through 7D illustrate examples of data held by the worker terminal 1 in the first process example. The worker terminal 1 includes an AR content management table (FIG. 7A) based on information acquired from the remote support server 2, an AR marker recognition information management table (FIG. 7B) generated in the worker terminal 1, a camera video management table (FIG. 7C), and a video recording state management table (FIG. 7D).

The AR content management table is a table for managing information of an AR content displayed for each AR marker, and includes items of "marker ID", "AR content ID", "coordinate values", "rotation angle", "magnification/reduction ratio", "texture path", etc. The "marker ID" is information for identifying an AR marker. The "AR content ID" is information for identifying the AR content. The "coordinate values" express the position where the AR content is to be displayed (relative values with respect to the position of the recognized AR marker). The "rotation angle" is the angle by which the image is rotated, when displaying the AR content. The "magnification/reduction ratio" is the ratio of magnifying/reducing an image when displaying the AR content. The "texture path" is the path where the image of the AR content is saved.

The AR marker recognition information management table is a table for holding information of a recognized AR marker, and includes items of "combination target video ID", "frame ID", "marker ID", "recognition information", etc. The "combination target video ID" is information for identifying a camera video to be the target for combining with the AR content corresponding to the AR marker. The "frame ID" is information of a serial number, a time stamp for each frame, etc., for identifying the frame of the camera image for displaying the AR content corresponding to the AR marker. The "marker ID" is information for identifying the recognized AR marker. The "recognition information" is recognition information of the AR marker, and is information indicating the tilt, the rotation angle, etc., of the AR marker photographed by a camera. The "-" indicates that the acquisition of recognition information of the AR marker is unsuccessful, and that there is no recognition information.

The camera video management table is a table for managing the camera video, and includes items of "camera video ID", "file name", etc. The "camera video ID" is information for identifying a camera video. The "file name" is the file name of the camera video.

The video recording state management table is a table for managing the recording state of a video by a camera, and includes an time of "video recording state", etc. The "video recording state" is "true" (recording video) or "false" (stopping recording video).

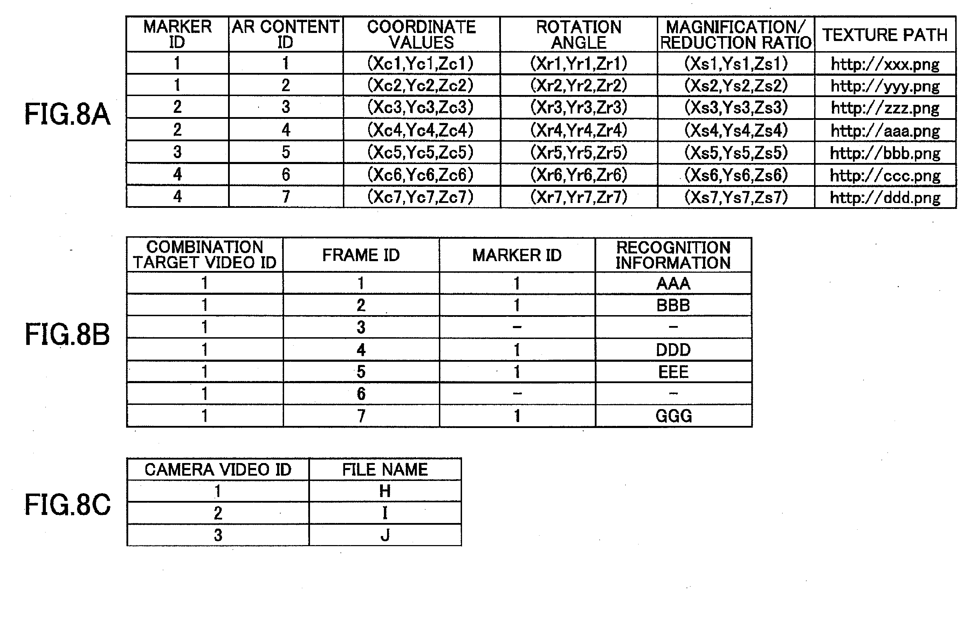

FIGS. 8A through 8C illustrate examples of data held by the remote support server 2 in the first process example. The remote support server 2 holds an AR content management table (FIG. 8A) that the remote support server 2 holds by itself and also provides to the worker terminal 1, an AR marker recognition information management table (FIG. 8B) based on information acquired as AR marker recognition information from the worker terminal 1, and a camera video management table (FIG. 8C). The AR content management table, the AR marker recognition information management table, and the camera video management table have the same contents as those of FIGS. 7A through 7C.

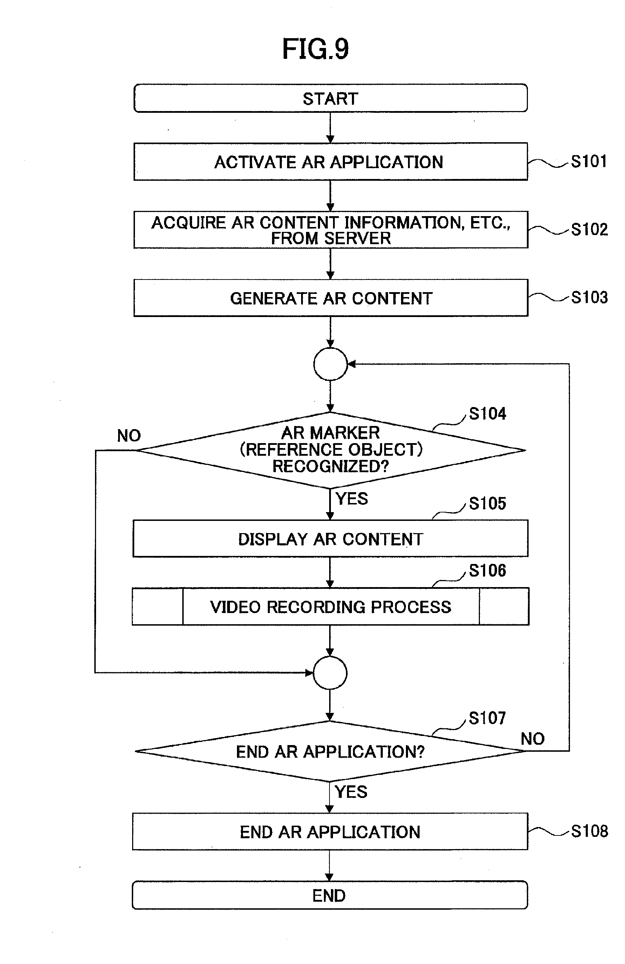

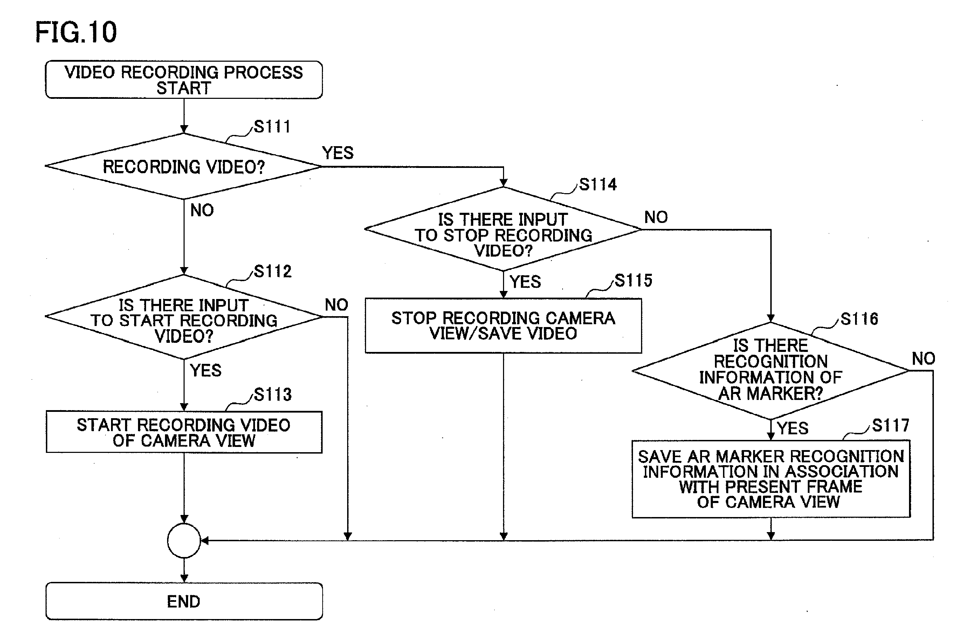

FIG. 9 is a flowchart of an example of a process performed by the worker terminal 1 according to the first process example. FIG. 10 is a flowchart of an example of a video recording process according to the first process example.

In FIG. 9, when the process starts, the worker terminal 1 activates the AR application 11 (step S101). When the AR application 11 is activated, the camera function is also activated, and the image recording unit 13 starts regular photographing, without recording a video.

When the worker terminal 1 is in an online environment, the AR content generating unit 12 of the activated AR application 11 acquires the newest AR content information (AR content management table), etc., from the remote support server 2 (step S102), and generates an AR content (step S103). When the worker terminal 1 is not in an online environment, the AR content generating unit 12 generates an AR content based on AR content information that has been acquired in the past, if there is any AR content information that has been acquired in the past.

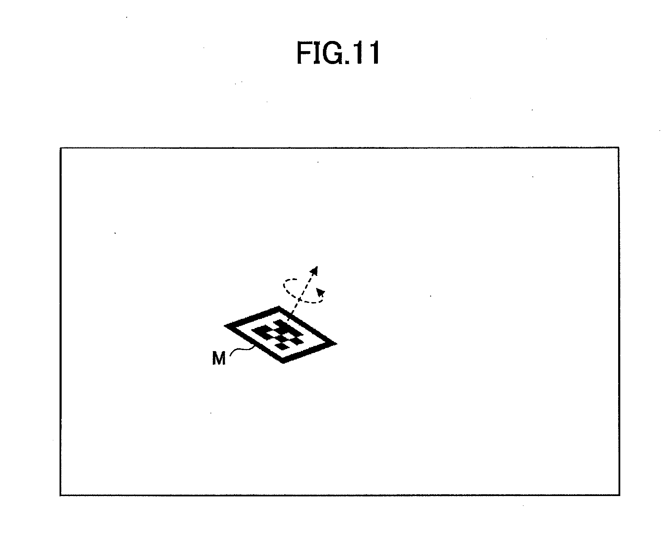

Next, the AR marker recognition unit 14 waits for an AR marker (reference object) to be recognized in the photographed image (step S104). FIG. 11 illustrates an example of recognizing an AR marker. That is, the AR marker recognition unit 14 captures the outline of the AR marker M in the photographed image, and then identifies the AR marker ID by a pattern recorded inside the outline. Then, according to the distortion of the image of the AR marker M, the AR marker recognition unit 14 recognizes the three-dimensional position of the AR marker M (tilt, rotation angle, etc., of the AR marker M).

Referring back to FIG. 9, when the AR marker recognition unit 14 recognizes an AR marker (YES in step S104), the AR content display unit 15 displays and superimposes the AR content, which corresponds to the AR marker and which has already been generated, on the photographed image (step S105).

Next, the image recording unit 13 performs a video recording process (step S106). Details of the video recording process are described with reference to FIG. 10.

In FIG. 10, the image recording unit 13 determines whether a video is being recorded based on the video recording state management table (step 5111), and branches the process.

When a video is not being recorded (NO in step S111), the image recording unit 13 determines whether there is input to start recording a video from the worker (step S112). When there is input to start recording a video (YES in step S112), the image recording unit 13 starts to record a video of the camera view (step S113), and ends the process. When there is no input to start recording a video (NO in step S112), the image recording unit 13 ends the process.

When a video is being recorded (YES in step S111), the image recording unit 13 determines whether there is input to stop recording the video from the worker (step S114). When there is input to stop recording a video (YES in step S114), the image recording unit 13 stops recording the video of the camera view and saves the video upon applying a predetermined file name (step S115), and ends the process. The saved camera video file is confirmed by the worker and sent to the remote support server 2 together with the AR marker recognition information to the remote support server 2 by the video sending unit 16, when the worker terminal 1 is subsequently in an online environment.

When there is no input to stop recording a video (NO in step S114), the image recording unit 13 determines whether there is AR marker recognition information (step S116). When there is AR marker recognition information (YES in step S116), the image recording unit 13 saves the AR marker recognition information in association with the present frame of the camera view (step S117).

Referring back to FIG. 9, after the above video recording process, or when an AR marker is not recognized (NO in step S104), the process shifts to determining whether to end the AR application 11 (step S107).

When the AR application 11 is not to be ended (NO in step S107), the process returns to determining whether an AR marker is recognized (step S104). When the AR application 11 is to be ended (YES in step S107), the AR application 11 is ended (step S108).

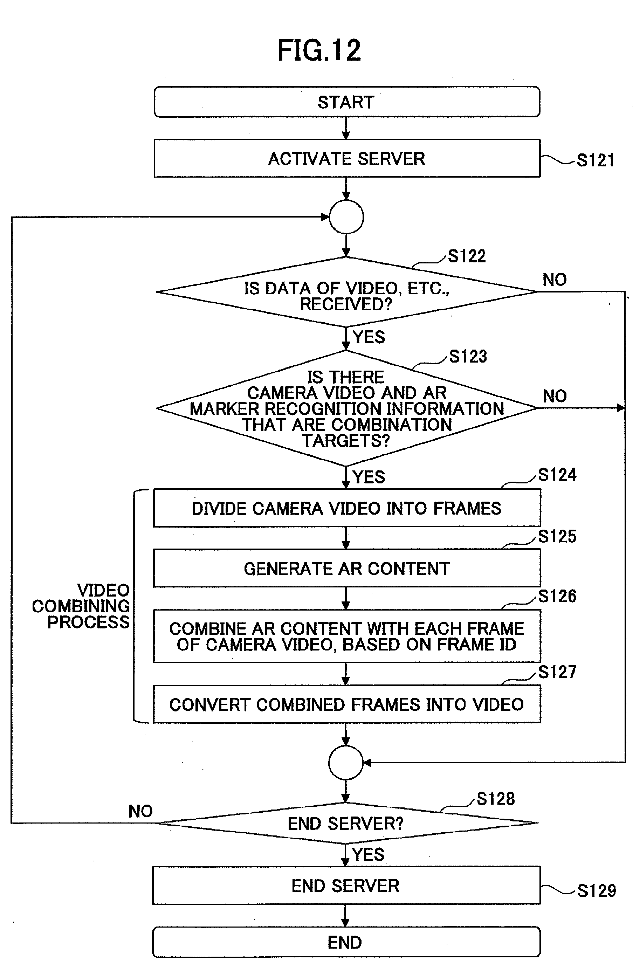

FIG. 12 is a flowchart of an example of a process performed by the remote support server 2 according to the first process example. In FIG. 12, when the process starts, the remote support server 2 activates the server (server function) (step S121).

Next, the video combining unit 23 determines whether data such as a video, etc., (camera video, AR marker recognition information) has been received from the worker terminal 1 (step S122).

When the data of a video, etc., has been received (YES in step S122), the video combining unit 23 determines whether there is a camera video and AR marker recognition information that are combination targets (targets to be combined with each other) (step S123).

When there is a camera video and AR marker recognition information that are combination targets (YES in step S123), the video combining unit 23 divides the camera video into frames (step S124), and generates AR content based on the AR marker recognition information (step S125). Then, the video combining unit 23 combines the AR content with respective frames of the camera video, based on the frame ID in the AR marker recognition information (step S126). Then, the video combining unit 23 converts the frames combined with the AR content into a video (step S127). The file that has been converted into a video is distributed to the manager terminal 3 in response to a request from the manager terminal 3, and is viewed at the manager terminal 3.

After the above video combining process, or when data of a video, etc., is not received (NO in step S122), or when there is no camera video and AR marker recognition information that are combination targets (NO in step S123), the process shifts to determining whether to end the server (step S128).

When the server is not to be ended (NO in step S128), the process returns to determining whether data of a video, etc., has been received (step S122). When the server is to be ended (YES in step S128), the server is ended (step S129).

Note that in the above process example, the AR marker recognition information (contents of AR marker recognition information management table), which is sent from the worker terminal 1 to the remote support server 2, does not include the image data per se, and the AR content ID indirectly indicates the image data; however, the image data per se of the AR content may be included in the AR marker recognition information that is sent. Furthermore, the recognition information in the AR marker recognition information indirectly indicates the display position of the AR content; however, the display position per se may be included in the AR marker recognition information.

As described above, the worker terminal 1 only sends the camera video and the AR marker recognition information to the remote support server 2, and therefore the processing load does not become a problem. Furthermore, the remote support server 2 is able to accurately generate the AR content based on the AR marker recognition information, and therefore the remote support server 2 is able to combine the AR content with the camera video at the same timing as the timing when the worker is viewing the video. As a result, the manager viewing the video at the manager terminal 3 is able to view the same video as the video viewed by the worker, and therefore the manager is able to provide appropriate remote support.

### <Second process example>

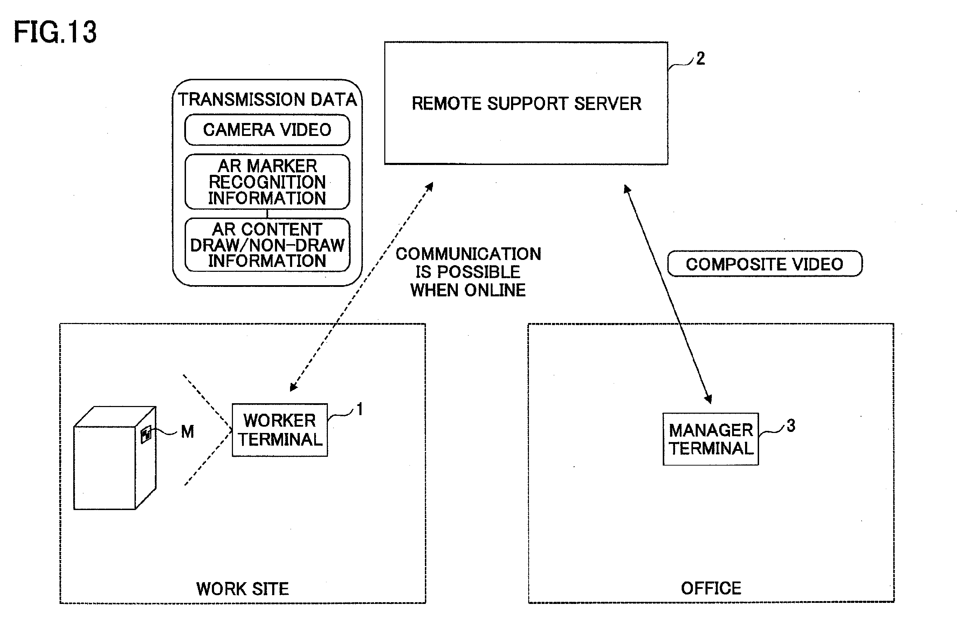

FIG. 13 illustrates an overview of a second process example. In FIG. 13, the worker terminal 1 at a work site generates a file of a camera video taken during the work process and a file of AR marker recognition information including AR content draw/non-draw information (information indicating whether the AR content corresponding to the AR marker is to be displayed, in units of frames of the camera video), and sends the files to the remote support server 2 when the worker terminal 1 is online. The remote support server 2 combines the camera image with the image of the AR content based on the files received from the worker terminal 1, and provides a file of the composite video to the manager terminal 3 used by a manager in an office.

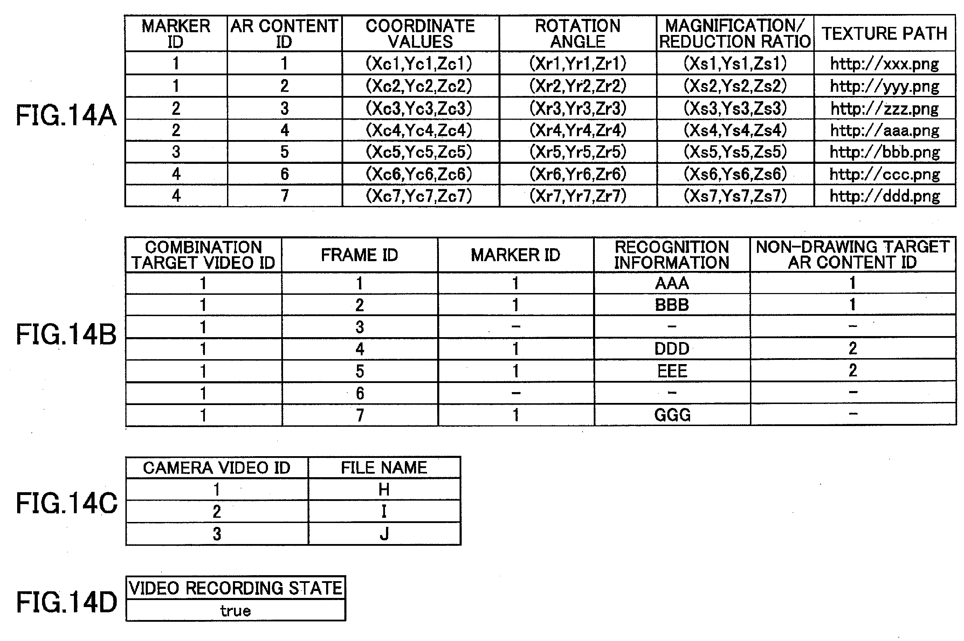

FIGS. 14A through 14D illustrate examples of data held by the worker terminal 1 in the second process example. The worker terminal 1 includes an AR content management table (FIG. 14A) based on information acquired from the remote support server 2, an AR marker recognition information management table (FIG. 14B) generated in the worker terminal 1, a camera video management table (FIG. 14C), and a video recording state management table (FIG. 14D).

The AR content management table, the camera video management table, and the a video recording state management table are the same as those of FIGS. 7A, 7C, and 7D, respectively. The AR marker recognition information management table is also the same as that of FIG. 7B, except that an item "non-drawing target AR content ID" is added. The "non-drawing target AR content ID" is information for identifying the AR content that is not a drawing target (the AR content that is not to be displayed), among the AR contents corresponding to the AR marker indicated by the marker ID, in association with the frame ID of the camera video. This includes a case where the AR content is not a drawing target because an AR content is not included in the camera image; and a case where the AR content is not a drawing target because AR display is not performed, in a case where AR display is performed based on position information and azimuth information according to GPS and beacons, but AR display is not performed because these functions are turned off.

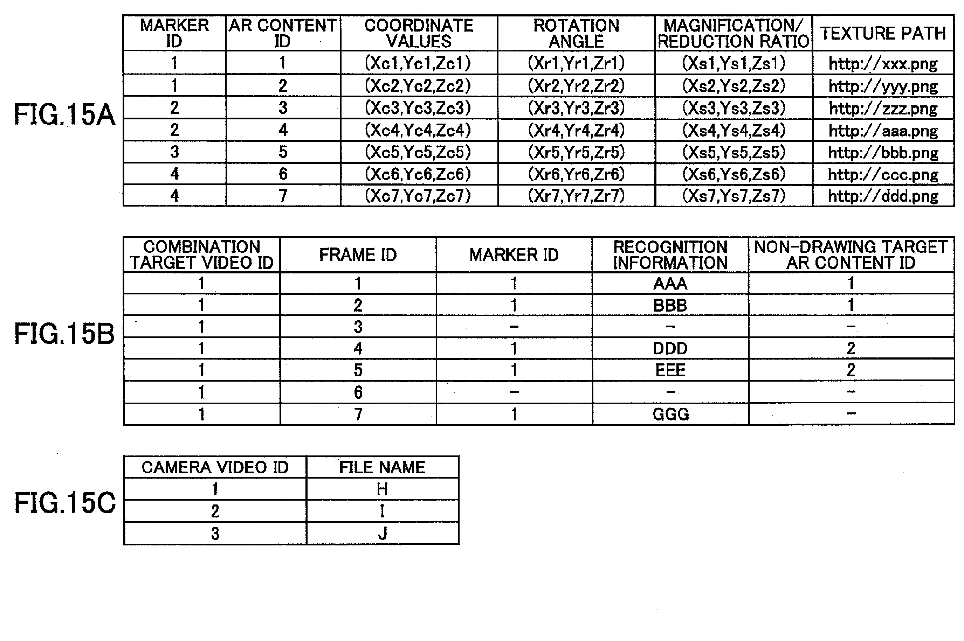

FIGS. 15A through 15C illustrate examples of data held by the remote support server 2 in the second process example. The remote support server 2 holds an AR content management table (FIG. 15A) that the remote support server 2 holds by itself and also provides to the worker terminal 1, an AR marker recognition information management table (FIG. 15B) based on information acquired as AR marker recognition information from the worker terminal 1, and a camera video management table (FIG. 15C). The AR content management table, the AR marker recognition information management table, and the camera video management table have the same contents as those of FIGS. 14A through 14C.

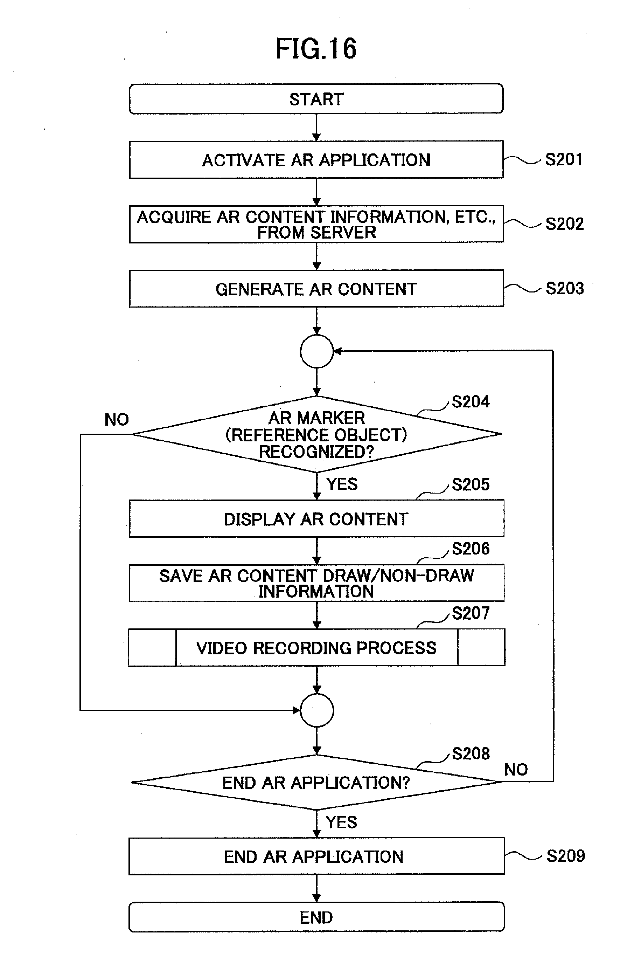

FIG. 16 is a flowchart of an example of a process performed by the worker terminal 1 according to the second process example. In FIG. 16, when the process starts, the worker terminal 1 activates the AR application 11 (step S201). When the AR application 11 is activated, the camera function is also activated, and the image recording unit 13 starts regular photographing, without recording a video.

When the worker terminal 1 is in an online environment, the AR content generating unit 12 of the activated AR application 11 acquires the newest AR content information (AR content management table), etc., from the remote support server 2 (step S202), and generates an AR content (step S203). When the worker terminal 1 is not in an online environment, the AR content generating unit 12 generates an AR content based on AR content information that has been acquired in the past, if there is any AR content information that has been acquired in the past.

Next, the AR marker recognition unit 14 waits for an AR marker (reference object) to be recognized in the photographed image (step S204).

Next, when the AR marker recognition unit 14 recognizes an AR marker (YES in step S204), the AR content display unit 15 displays and superimposes the AR content, which corresponds to the AR marker and which has already been generated, on the photographed image (step S205).

Next, the AR content display unit 15 saves AR content draw/non-draw information (AR content ID that is not a target of drawing in units of frames), based on whether an AR content is not included in the camera image; or AR display is not performed in a case where AR display is performed based on position information and azimuth information according to GPS and beacons, but AR display is not performed because these functions are turned off (step S206).

Next, the image recording unit 13 performs a video recording process (step S207). Contents of the video recording process are the same as those described with reference to FIG. 10.

Next, after the above video recording process, or when an AR marker is not recognized (NO in step S204), the process shifts to determining whether to end the AR application 11 (step S208).

When the AR application 11 is not to be ended (NO in step S208), the process returns to determining whether an AR marker is recognized (step S204). When the AR application 11 is to be ended (YES in step S208), the AR application 11 is ended (step S209).

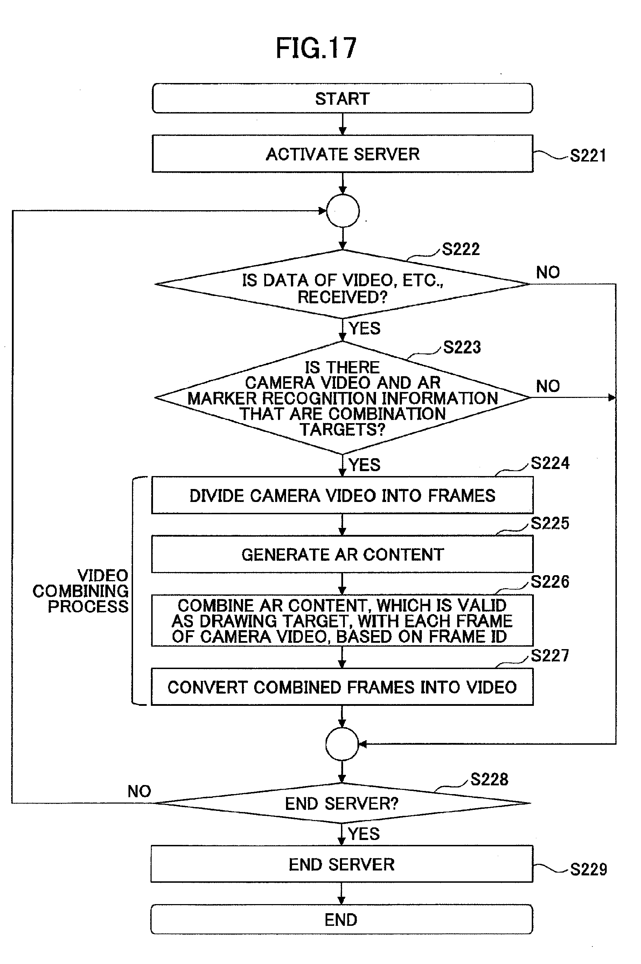

FIG. 17 is a flowchart of an example of a process performed by the remote support server 2 according to the second process example. In FIG. 17, when the process starts, the remote support server 2 activates the server (server function) (step S221).

Next, the video combining unit 23 determines whether data such as a video, etc., (camera video, AR marker recognition information) has been received from the worker terminal 1 (step S222).

When the data of a video, etc., has been received (YES in step S222), the video combining unit 23 determines whether there is a camera video and AR marker recognition information that are combination targets (targets to be combined with each other) (step S223).

When there is a camera video and AR marker recognition information that are combination targets (YES in step S223), the video combining unit 23 divides the camera video into frames (step S224), and generates an AR content based on the AR marker recognition information (step S225). At this time, the video combining unit 23 does not generate an AR content that is not valid as a drawing target based on the AR content draw/non-draw information (AR content ID that is not a target of drawing in units of frames).

Next, the video combining unit 23 combines the AR content that is valid as a drawing target based on the AR content draw/non-draw information, with each frame of the camera video, based on the frame ID in the AR marker recognition information (step S226). Then, the video combining unit 23 converts the frames combined with the AR content into a video (step S227). The file that has been converted into a video is distributed to the manager terminal 3 in response to a request from the manager terminal 3, and is viewed at the manager terminal 3.

After the above video combining process, or when data of a video, etc., is not received (NO in step S222), or when there is no camera video and AR marker recognition information that are combination targets (NO in step S223), the process shifts to determining whether to end the server (step S228).

When the server is not to be ended (NO in step S228), the process returns to determining whether data of a video, etc., has been received (step S222). When the server is to be ended (YES in step S228), the server is ended (step S229).

As described above, the worker terminal 1 only sends the camera video and the AR marker recognition information to the remote support server 2, and therefore the processing load does not become a problem. Furthermore, the remote support server 2 is able to accurately generate the AR content based on the AR marker recognition information, and therefore the remote support server 2 is able to combine the AR content with the camera video at the same timing as the timing when the worker is viewing the video. As a result, the manager viewing the video at the manager terminal 3 is able to view the same video as the video viewed by the worker, and therefore the manager is able to provide appropriate remote support. Furthermore, it is possible to omit the generation and combination of a wasteful AR content based on the AR content draw/non-draw information, and therefore the processing load at the remote support server 2 is reduced.

### <Third process example>

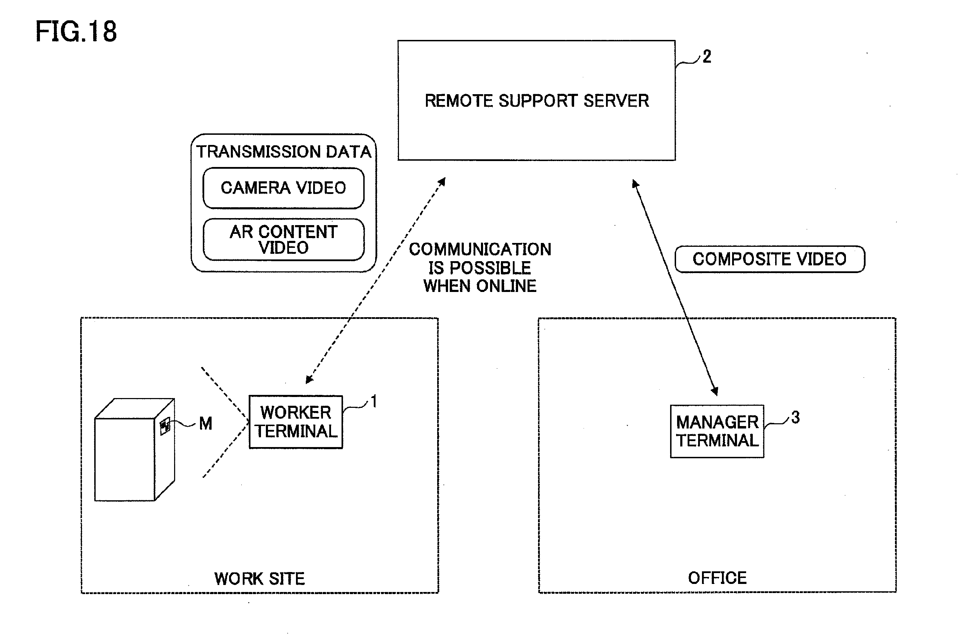

FIG. 18 illustrates an overview of a third process example. In FIG. 18, the worker terminal 1 at a work site generates a file of a camera video taken during the work process and a file of an AR content video, and sends the files to the remote support server 2 when the worker terminal 1 is online. The remote support server 2 combines the camera video with the AR content video based on the files received from the worker terminal 1, and provides a file of the composite video to the manager terminal 3 used by a manager in an office.

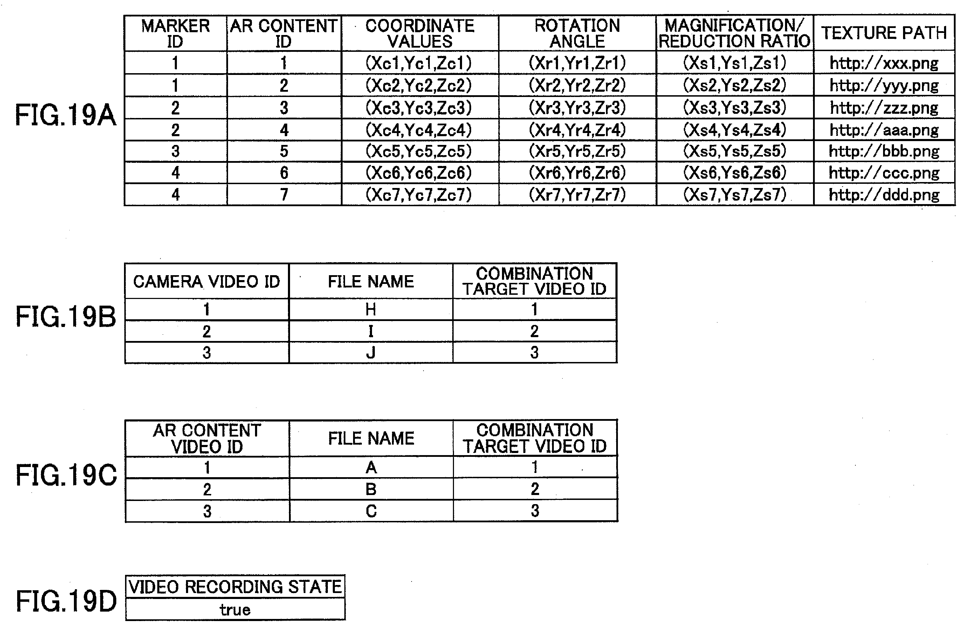

FIGS. 19A through 19D illustrate examples of data held by the worker terminal 1 in the third process example. The worker terminal 1 includes an AR content management table (FIG. 19A) based on information acquired from the remote support server 2, a camera video management table (FIG. 19B) generated in the worker terminal 1, an AR content video management table (FIG. 19C), and a video recording state management table (FIG. 19D).

The AR content management table and the video recording state management table are the same as those of FIGS. 7A and 7D, respectively. The camera video management table is also the same as that of FIG. 7C, except that an item "combination target video ID" is added. The "combination target video ID" is information for identifying the AR content video to be the target for combining with the camera video.

The AR content video management table is a table for managing the AR content videos, and includes items of "AR content video ID", "file name", "combination target video ID", etc. The "AR content video ID" is information for identifying the AR content video. The "file name" is a file name of an AR content video. The "combination target video ID" is information for identifying the camera video to be the target for combining with the AR content video.

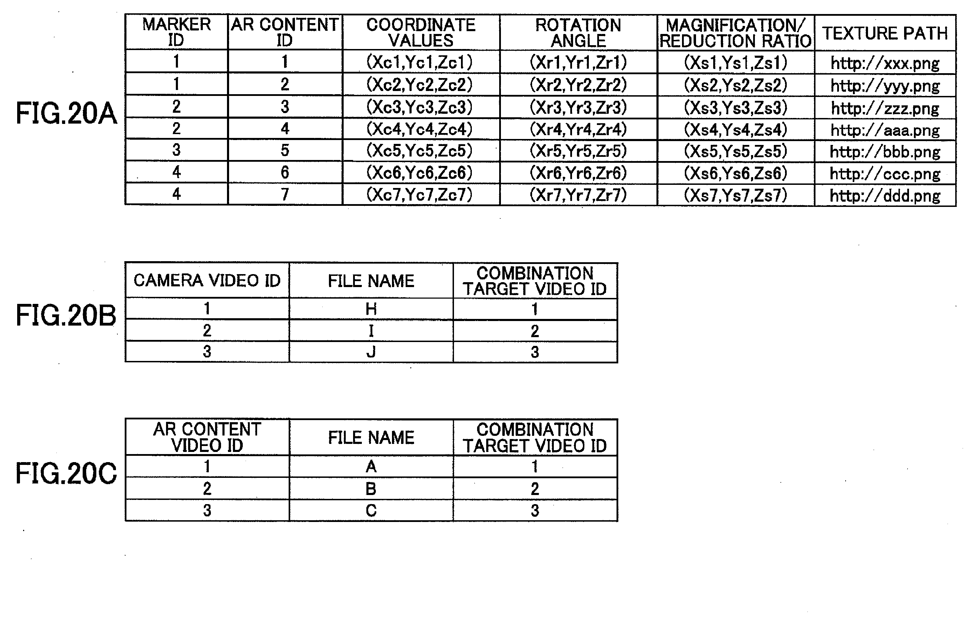

FIGS. 20A through 20C illustrate examples of data held by the remote support server 2 in the third process example. The remote support server 2 holds an AR content management table (FIG. 20A) that the remote support server 2 holds by itself and also provides to the worker terminal 1, a camera video management table (FIG. 20B) based on a camera video acquired from the worker terminal 1 and related information of the AR content video, and an AR content video management table (FIG. 20C). The AR content management table, the camera video management table, and the AR content video management table have the same contents as those of FIGS. 19A through 19C.

The main process by the worker terminal 1 according to the third process example is the same as that of FIG. 9, except for the video recording process.

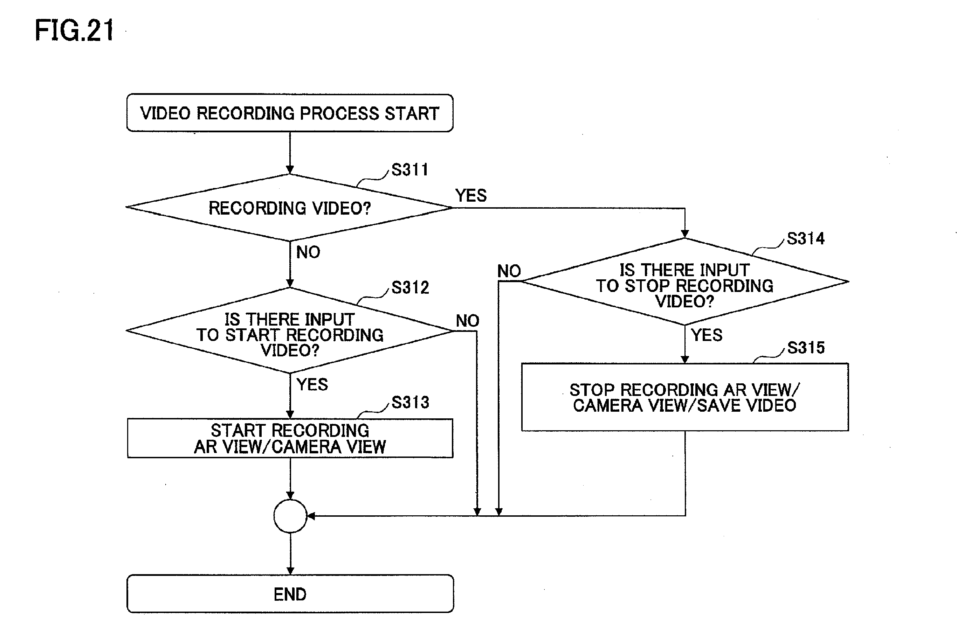

FIG. 21 is a flowchart of an example of a video recording process according to the third process example. In FIG. 21, the image recording unit 13 determines whether a video is being recorded based on the video recording state management table (step S311), and branches the process.

When a video is not being recorded (NO in step S311), the image recording unit 13 determines whether there is input to start recording a video from the worker (step S312). When there is input to start recording a video (YES in step S312), the image recording unit 13 starts to record a video of the AR view (AR content image) and the camera view (step S313), and ends the process. When there is no input to start recording a video (NO in step S312), the image recording unit 13 ends the process.

When a video is being recorded (YES in step S311), the image recording unit 13 determines whether there is input to stop recording the video from the worker (step S314). When there is no input to stop recording a video (NO in step S314), the image recording unit 13 ends the process.

When there is input to stop recording a video (YES in step S314), the image recording unit 13 stops recording the videos of the AR view and the camera view and saves the videos upon applying predetermined file names (step S315), and ends the process. The saved camera video file and AR content video file are confirmed by the worker and sent to the remote support server 2 by the video sending unit 16, when the worker terminal 1 is subsequently in an online environment.

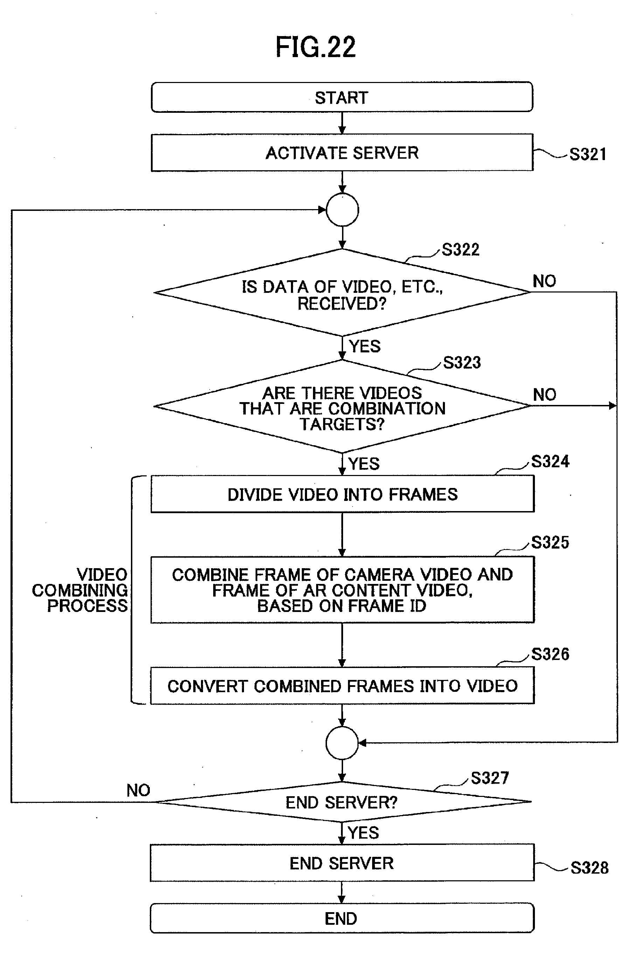

FIG. 22 is a flowchart of an example of a process performed by the remote support server 2 according to the third process example. In FIG. 22, when the process starts, the remote support server 2 activates the server (server function) (step S321).

Next, the video combining unit 23 determines whether data such as videos, etc., (camera video, AR convent video) has been received from the worker terminal 1 (step S322).

When the data of videos, etc., has been received (YES in step S322), the video combining unit 23 determines whether there are videos that are combination targets (targets to be combined with each other) (step S323).

When there are videos that are combination targets (YES in step S323), the video combining unit 23 divides the videos into frames (step S324), and combines the frames of the camera video with the frames of the AR content video, based on the frame ID (step S325). Then, the video combining unit 23 converts the combined frames into a video (step S326). The file that has been converted into a video is distributed to the manager terminal 3 in response to a request from the manager terminal 3, and is viewed at the manager terminal 3.

After the above video combining process, or when data of videos, etc., is not received (NO in step S322), or when there are no videos that are combination targets (NO in step S323), the process shifts to determining whether to end the server (step S327).

When the server is not to be ended (NO in step S327), the process returns to determining whether data of videos, etc., has been received (step S322). When the server is to be ended (YES in step S327), the server is ended (step S328).

As described above, the worker terminal 1 sends the camera video and the AR content video to the remote support server 2 without combining these videos, and therefore the processing load does not become a problem. Furthermore, the remote support server 2 combines the camera video and the AR content video, so that the remote support server 2 is able to generate the same video as that being viewed by the worker. As a result, the manager viewing the video at the manager terminal 3 is able to view the same video as the video viewed by the worker, and therefore the manager is able to provide appropriate remote support.

### <Overview>

As described above, according to the present embodiment, it is possible to reproduce an image of an object on the side that is providing remote support, without increasing the load of the terminal when remote support is provided to the terminal.

Embodiments of the present invention have been described in detail above; however, a variety of modifications and changes may be made without departing from the scope of the present invention. That is, the present invention is not limited to the specific embodiments described herein or the attached drawings.

The camera 103 is an example of an "imaging device". The AR marker is an example of a "reference object". The camera video file is an example of a "first file". The frame ID is an example of "identification information of the frame". The AR content video file is an example of the "second file". The marker ID in the AR marker recognition information management table (FIG. 7B) is an example of "object data". The remote support server 2 is an example of an "information processing apparatus".

## Claims

1. A display control method executed by a computer, the display control method comprising:
generating (13) a first file that includes images of a plurality of frames captured by an imaging device (13, 103);
generating (12, 13, 14) a second file that includes identification information of a frame that is determined to include an image of a reference object among the images of the plurality of frames, and object data registered in association with the reference object included in the determined frame; and
sending (16) the first file and the second file to an information processing apparatus (2) configured to execute a combination process of combining the images of the plurality of frames with the object data, based on the identification information.

2. The display control method according to claim 1, wherein
the second file further includes a display position of the object data in the frame that is determined to include the image of the reference object.

3. The display control method according to claim 1, wherein
the second file further includes information of the object data that is not a drawing target.

4. A display control method executed by a computer, the display control method comprising:
generating (13) a first file that includes images of a plurality of frames captured by an imaging device (13, 103);
generating (12, 13, 14) a second file that includes a plurality of images of object data; and
sending (16) the first file and the second file to an information processing apparatus (2) configured to execute a combination process of combining the images of the plurality of frames with the plurality of images of the object data.

5. An information processing apparatus (1) comprising:
a first generating unit (13) configured to generate a first file that includes images of a plurality of frames captured by an imaging device (13, 103);
a second generating unit (12, 13, 14) configured to generate a second file that includes identification information of a frame that is determined to include an image of a reference object among the images of the plurality of frames, and object data registered in association with the reference object included in the determined frame; and
a sending unit (16) configured to send the first file and the second file to an information processing apparatus (2) configured to execute a combination process of combining the images of the plurality of frames with the object data, based on the identification information.

6. The information processing apparatus according to claim 5, wherein
the second file further includes a display position of the object data in the frame that is determined to include the image of the reference object.

7. The information processing apparatus according to claim 5, wherein
the second file further includes information of the object data that is not a drawing target.

8. An information processing apparatus (1) comprising:
a first generating unit (13) configured to generate a first file that includes images of a plurality of frames captured by an imaging device (13, 103) ;
a second generating unit (12, 13, 14) configured to generate a second file that includes a plurality of images of object data; and
a sending unit (16) configured to send the first file and the second file to an information processing apparatus (2) configured to execute a combination process of combining the images of the plurality of frames with the plurality of images of the object data.

9. A display control program that causes a computer to execute a process, the process comprising:
generating (13) a first file that includes images of a plurality of frames captured by an imaging device (13, 103);
generating (12, 13, 14) a second file that includes identification information of a frame that is determined to include an image of a reference object among the images of the plurality of frames, and object data registered in association with the reference object included in the determined frame; and
sending (16) the first file and the second file to an information processing apparatus (2) configured to execute a combination process of combining the images of the plurality of frames with the object data, based on the identification information.

10. The display control program according to claim 9, wherein
the second file further includes a display position of the object data in the frame that is determined to include the image of the reference object.

11. The display control program according to claim 9, wherein
the second file further includes information of the object data that is not a drawing target.

12. A display control program that causes a computer to execute a process, the process comprising:
generating (13) a first file that includes images of a plurality of frames captured by an imaging device (13, 103);
generating (12, 13, 14) a second file that includes a plurality of images of object data; and
sending (16) the first file and the second file to an information processing apparatus (2) configured to execute a combination process of combining the images of the plurality of frames with the plurality of images of the object data.
